# EUROPÄISCHE PATENTSCHRIFT

(11) **EP 2 673 223 B1**
(45) Veröffentlichungstag und Bekanntmachung des Hinweises auf die Patenterteilung: **31.08.2022**
(21) Anmeldenummer: 12702409.9
(22) Anmeldetag: 17.01.2012
(51) Int. Cl.: B65G 54/02, H02K 41/03, H02K 1/278, H02K 16/00

(54) **SORTIERER**
SORTER
TRIEUR

(30) Priorität: 07.02.2011 DE 102011010543
(43) Veröffentlichungstag der Anmeldung: 18.12.2013
(73) Patentinhaber: SEW-EURODRIVE GmbH & Co. KG, 76646 Bruchsal (DE)
(72) Erfinder: BERGER, Lothar, 68753 Waghäusel (DE)
(86) Internationale Anmeldenummer: PCT/EP2012/000173
(87) Internationale Veröffentlichungsnummer: WO 2012/107159

(56) Entgegenhaltungen:
- WO-A1-2008/125121
- DE-A1-102008 006 305
- US-A1- 2006 011 093

## Beschreibung

Die Erfindung betrifft einen Sorter.

Aus der WO 2008/125122 A1 ist ein Sorter (sorting system) bekannt, das aneinandergekoppelte Wagen (carts) aufweist, die jeweils eine Reihe von Dauermagneten aufweisen, wobei der letzte und erste Dauermagnet in Bewegungsrichtung kürzer ausgeführt sind als die anderen Dauermagnete der Reihe, um einen Kupplungsbereich frei zu halten.

Dabei wird der Kupplungsbereich durch die verkürzte Ausführung der beiden Dauermagnete geschaffen, die sich am jeweiligen Endbereich eines jeden Wagens befinden. Ein aus Hallsensoren bestehendes Positionssensorsystem erhält beim Vorbeibewegen der Wagen zwar ein zeitlich verkürztes Signal, aber kein lückendes Signal. Es genügt also sogar ein einziges Hallsensorsystem, das die vorbeibewegenden Dauermagnete zählt, um die Position des Sorters zu erfassen.

Aus der WO 2008/125121 A1 ist ein Sorter (sorting system) bekannt, das aneinandergekoppelte Wagen (carts) aufweist, die jeweils eine Reihe von Dauermagneten aufweisen, wobei im Kopplungsbereich eine Magnetlücke, also ein einziger lückender (fehlender)

Dauermagnet angeordnet ist. Somit stehen sich an den jeweiligen sich gegenüberstehenden Wagen jeweils gleichartig magnetisierte Dauermagnete gegenüber, wie beispielswiese Nordpol und Nordpol. Auch auf diese Weise ist ein Kupplungsbereich freigehalten. Ein aus Hallsensoren bestehendes Positionssensorsystem erhält beim Vorbeibewegen der Wagen zwar ein zeitlich verkürztes Signal, aber kein lückendes Signal. Mit einem einzigen Hallsensorsystem, das die vorbeibewegenden Dauermagnete zählt, ist die Erfassung der Position des Sorters nicht in einfacher Weise möglich.

Aus der DE 10 2008 006 305 A1 ist ein Positionserfassungssystem bekannt, das bei einer lückenden Dauermagnetanordnung die Position in einfacher Weise fehlerfrei erfassen kann, ISI\ET X:\01-Gewerbliche Schutzrechte\01 Patente\01.01 Ablage\PT5833\PT5833-WO-EP\PT5833-WO-EP-010-bescherw-004-reinschrift.doc 04.02.2021 wobei das dortige Ausführungsbeispiel zwei lückende Magnete aufweist und somit eine Mehrheitsentscheidung von drei Sensoren eingesetzt wird. Allerdings ist das System nur bei zwei lückenden Dauermagneten einsetzbar. Bei größeren Lücken ist das in der DE 10 2008 006 305 A1 gezeigte System nicht funktionsfähig. Im Absatz [0037] weist die DE 10 2008 006 305 A1 zwar auf größere geradzahlige Magnetlücken hin, nennt aber keine konkrete Ausführung.

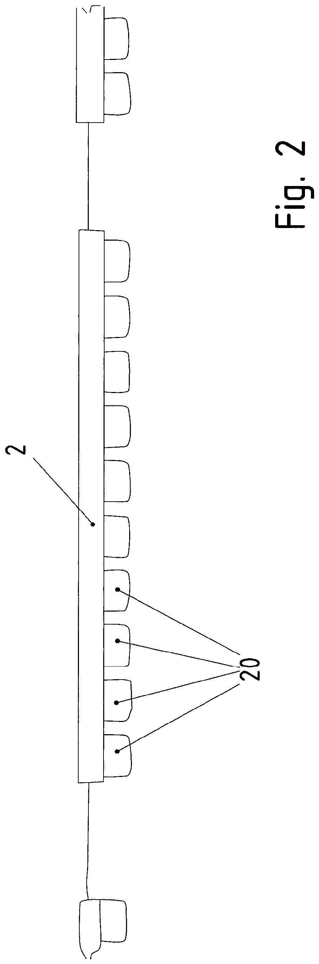

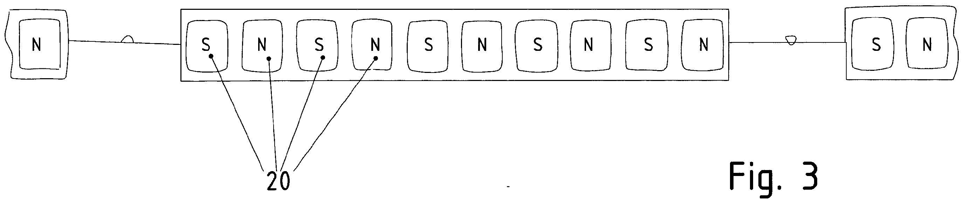

Aus der US 2006/011093 A1 ist ein Sorter (100) bekannt, wobei der Sorter (100) eine Fahrbahn (101) und in Reihe angeordnete, jewiels aneinander gekoppelte Wagen (102) aufweist, die entlang der Fahrbahn (101) bewegbar angeordnet sind, wobei jeder Wagen (102) eine Dauermagnetanordnung (reaction element 200) aufweist, die aus in Bewegungsrichtung in Reihe angeordneten, regelmäßig voneinander beabstandeten Dauermagneten (203) besteht, wobei der jeweils nächstbenachbarte Dauermagnet eine entgegengesetzte Magnetisierungsrichtung aufweist (vgl. Fig. 2), wobei die Dauermagnetanordnung der Wagen (102) als Reaktivteil eines Linearsynchronmotors wirksam ist und entlang der Fahrbahn (101), die implizit Statorwicklungen des Linearsynchronmotors wirksam ist und entlang der Fahrbahn (101), die implizit Statorwicklungen des Linearsynchronmtors aufweist, bewegbar ist, von deren Magnetfeldern in Wechselwirkung mit den Dauermagneten (203) die Traktionskraft für die Wagen (102) des Sorters (100) erzeugbar ist, wobei die Dauermagnetanordnung (200) modular aufgebaut ist, also aus Modulen zusammengeseztt ist, wobei ein jeweiliges Modul (200) eine jeweilige Grundplatte (201) aufweist, auf der eine dem Modul (200) zugeordnete Anzahl von Dauermagneten (203) befestigt ist, wobei die Grundplatte (201) an der der Fahrbahn zugeordneten Seite des jeweiligen Wagens (102) angeordnet ist (vgl. Fig. 3), wobei ein Abstand (a) zwischen den in Bewegungsrichtung vorderen Kanten, Ecken oder zwischen den Schwerpunkten oder Mittelpunkten der Dauermagnete (203) besteht (vgl. Fig. 2), wobei benachbarte Wagen (102) mittels einer Kupplung aneinander gekoppelt sind (vgl. Fig. 3), welche aus einem vorderen, also ersten, an einem ersten der beiden Wagen (102) befestigten Kupplungsteil und implizit aus einem hinteren, also zweiten, an dem zweiten der beiden Wagen (102) befestigten Kupplungsteil besteht, und dadurch wobei im Kopplungsbereich n sogenannt lückende Dauermagnete (202), also n Fehlstellen in der Reihung der Dauermagnete (203), vorgesehen sind, wobei als Konsequenz daraus der letzte Dauermagnet (203) eines ersten Wagens (102) und der erste Dauermagnet (203) eines hierzu nächstbenachbarten Wagens (102) den (n+1)-fahcen Abstand ((n+1)*a) zueinander aufweisen, der im Vergleich zum einfachen Abstand (a) größer ist. Durch die dreiecksförmige Ausformung der Kupplungsteile an den beiden Wagenenden sind engere Kurvenradien durchfahrbar.

Der Erfindung liegt daher die Aufgabe zugrunde, einen Sorter kostengünstig herstellbar zu machen.

Erfindungsgemäß wird die Aufgabe bei dem Sorter nach den in Anspruch 1 oder 3 angegebenen Merkmalen gelöst.

Von Vorteil ist bei dem Sorter nach Anspruch 1 dabei, dass der Sorter aus gleichartigen Wagen zusammensetzbar ist, wobei jeder Wagen eine ungerade Anzahl von Dauermagneten aufweist und ein großer Abstand zwischen den Wagen realisierbar ist. Somit sind sehr enge Kurven, also kleine Kurvenradien, durchfahrbar. Außerdem werden somit die jeweils benachbarten Wagen voneinander magnetisch abgestoßen und die verbundenen Kupplungen der Wagen entlastet. Sie müssen also nur begrenzend gegen die Erhöhung des relativen Abstandes der benachbarten Wagen voneinander wirken. Ein Auffahren der Wagen - beispielsweise bei einem Bremsvorgang - wird schon durch die im Kupplungsbereich sich gegenüberstehenden Magnete verhinderbar.

Von Vorteil ist bei dem Sorter nach Anspruch 3 dabei, dass ein großer dauermagnetfreier Bereich zwischen den Wagen des Sorters, also Sortersystems, geschaffen ist und somit der Kopplungsbereich auch das Durchfahren enger Kurvenradien ermöglicht. Außerdem sind zwei Lücken vorhanden. Somit stehen sich entgegengesetzt magnetisierte Dauermagnete an den sich gegenüberstehenden Endbereichen der nächstbenachbarten Wagen gegenüber. Dabei wird also der letzte Dauermagnet eines ersten Wagens, beispielsweise ein zur Statorwicklung gerichteter Nordpol, gefolgt von einem ersten Dauermagnet des nächsten Wagens, beispielsweise ein zur Statorwicklung gerichteter Südpol. Ein an der Fahrbahn angeordneter Hallsensor oder Wiegandsensor ist somit beispielsweise in der Lage, in einfacher Weise, nämlich durch Erkennen der Magnetisierungsrichtung, die Anzahl der aufeinander folgenden Dauermagnete zu bestimmen. Daraus lässt sich bei bekannter Anzahl von Dauermagneten des jeweiligen Wagens die Position des Sorters bestimmen. Wenn sich hingegen am Kopplungsbereich gleichgerichtet magnetisierte Dauermagnete gegenüberstehen, beispielsweise zwei Nordpole, ist ein einfaches Abzählen der Dauermagnete mittels Erkennen der Magnetisierungsrichtungsänderung nicht ausführbar. Von Vorteil ist weiter, dass ein großer Kupplungsbereich zwischen den einzelnen Wagen zur Verfügung steht und somit auch enge Kurven, also kleine Kurvenradien, durchfahrbar sind. Bei einer vorteilhaften Ausgestaltung ist eine Magnetisierungsrichtung senkrecht zur Bewegungsrichtung ausgerichtet. Von Vorteil ist dabei, dass die Magnetisierungsrichtung in Richtung oder entgegengesetzt zur Fahrbahn beziehungsweise zum Stator ausrichtbar ist.

Bei einer vorteilhaften Ausgestaltung sind die Wagen entlang der Fahrbahn schienengeführt. Von Vorteil ist dabei, dass eine einfache Bestimmung der Position ausführbar ist.

Bei der Ausgestaltung ist die Dauermagnetanordnung modular aufgebaut, also aus Modulen zusammengesetzt, wobei ein jeweiliges Modul eine jeweilige Grundplatte aufweist, auf der eine dem Modul zugeordnete Anzahl von Dauermagneten befestigt ist, wobei unterschiedliche Module sich in der Anzahl unterscheiden, wobei die Grundplatte an der der Fahrbahn zugeordneten Seite des jeweiligen Wagens angeordnet ist. Von Vorteil ist dabei, dass eine einfache Herstellung von Wagen unterschiedlicher Länge aus einem Baukasten von Modulen ausführbar ist. Dabei ist aus die jeweilige Dauermagnetanordnung eines jeden Wagens durch in Bewegungsrichtung aneinander gesetzte Module herstellbar. Somit sind auch aus den in einem Lager bevorrateten Modulen verschiedene Wagen und/oder Sortersysteme herstellbar. Je nach Bedarf ist also aus einem Baukasten von Modulen ein Wagen und/oder Sorter gewünschter Länge zusammensetzbar.

Bei der einen Ausgestaltung ist n eine gerade Zahl, so dass sich Dauermagnete entgegengesetzter Magnetisierungsrichtung gegenüberstehen. Von Vorteil ist dabei, dass wiederum die Bestimmung der Position in einfacher Weise ausführbar ist, also durch Bestimmen der Magnetisierungsrichtungsänderung und entsprechendes Abzählen der Magnetisierungsrichtungsänderungswechsel.

Bei dieser Ausgestaltung ist die Dauermagnetanordnung als Reaktivteil eines

Linearsynchronmotors wirksam, also entlang der Fahrbahn Statorwicklungen des Linearsynchronmotors angeordnet sind, von deren Magnetfeldern in Wechselwirkung mit den Dauermagneten die Traktionskraft für die Wagen und/oder des Sorters erzeugbar ist. Von Vorteil ist dabei, dass ein dynamisches Antriebsprinzip für den Sorter wählbar ist. Somit ist ein schnelles Positionieren, also Anfahren einer gewünschten Position des Sorters, ausführbar. Unter Position ist dabei auch die zurückgelegte Fahrstrecke der Wagen seit Inbetriebnahme zu verstehen.

Bei beiden Ausgestaltungen sind die Module jedes Wagens in Bewegungsrichtung hintereinander angeordnet und an einem Befestigungsmittel des jeweiligen Wagens verbunden. Von Vorteil ist dabei, dass der Wagen ein Befestigungsmittel zur Aufnahme der Module aufweist, so dass die Module in einfacher Weise aneinanderreihbar und mit dem Wagen verbindbar sind. Als Befestigungsmittel ist beispielsweise auch das Gestänge des jeweiligen Wagens verwendbar.

Die Erfindung wird nun anhand von schematischen Abbildungen näher erläutert:

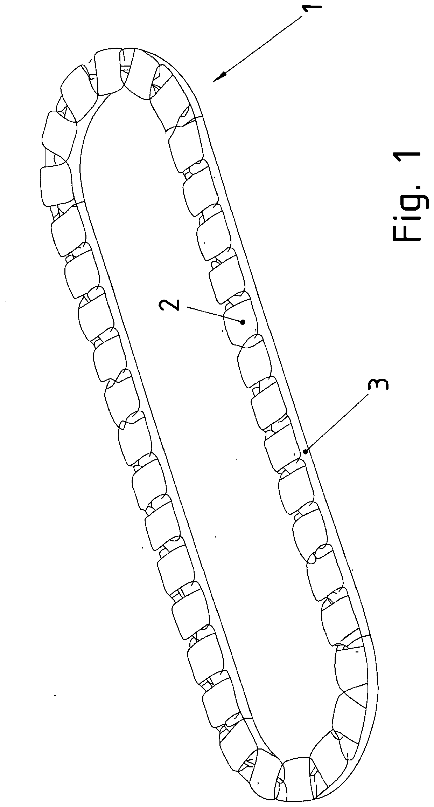

In der Figur 1 ist ein Sorter 1 mit hintereinander angeordneten, jeweils aneinander gekoppelten Wagen 2 gezeigt.
In Figur 2 ist ein Ausschnitt dieser Wagenkette in Seitenansicht gezeigt.
In Figur 3 ist ein Ausschnitt dieser Wagenkette in Untersicht gezeigt, wobei die Dauermagnete 20 abwechselnd magnetisiert sind.

Die Wagen 2 des Sorters 1 bilden eine geschlossene Kette von Wagen 2, welche auf einer Fahrbahn bewegbar angeordnet sind. Hierzu ist beispielsweise jeder Wagen 2 mit Rädern ausgestattet, die auf Schienen der Fahrbahn bewegbar sind. Statt der schienengeführten Ausführung sind aber auch nicht-schienengeführte Anwendungen ausführbar.

Die Fahrbahn weist Statorwicklungen zur Erzeugung eines Magnetfeldes auf, welches wechselwirkt mit Dauermagneten, welche vorzugsweise an der Unterseite der Wagen 2 angeordnet sind. Somit ist ein Antreiben der Wagen nach Art eines Synchronlinearmotors ermöglicht.

Die Dauermagnete 20 an der Unterseite jedes Wagens 2 sind in Bewegungsrichtung hintereinander und jeweils regelmäßig voneinander beabstandet angeordnet. Die Magnetisierungsrichtung von jeweils direkt benachbarten Dauermagneten ist entgegengesetzt, so dass zur Fahrbahn hin abwechselnd Nordpole und Südpole angeordnet sind, wie in Figur 3 deutlich gemacht. Der Abstand zwischen der in Bewegungsrichtung vorderen Kante zweier benachbarten Dauermagnete ist also ein Abstand a. Die jeweilige Länge eines Dauermagneten ist b, wobei b vorzugsweise kleiner ist als a, so dass die Dauermagnete 20 sich nicht direkt berühren.

Zwischen den Wagen ist ein Kupplungsbereich vorgesehen, so dass die regelmäßig beabstandete Dauermagnetanordnung eines Wagens 2 und die die regelmäßig beabstandete Dauermagnetanordnung eines hierzu nächstbenachbarten Wagens 2 einen Abstand von zwei Dauermagneten aufweist, wenn die beiden Wagen jeweils in Linie zueinander ausgerichtet sind. Der Abstand der in Bewegungsrichtung vorderen Kante des letzten Dauermagneten 20 eines Wagens 2 zur in Bewegungsrichtung vorderen Kante des ersten Dauermagneten 20 des hierzu nächstbenachbarten Wagens 2 beträgt also 3 a.

Die gesamte Dauermagnetanordnung aller Dauermagnete des Sorters weist also jeweils im Kopplungsbereich der Wagen zwei Lücken, also zwei lückende Dauermagnete, auf.

Auf diese Weise ist bei Kurven, also bei zueinander geneigter Ausrichtung zweier nächstbenachbarten Wagen 2 genügend Platz zwischen den Wagen um auch sehr enge Kurven, also kleine Kurvenradien durchfahrbar zu machen. Zusätzlich oder alternativ ist auch genügend Platz für kreuzende Querantriebe vorhanden, die somit den jeweiligen Kupplungsbereich der Wagen nutzen können.

In dem weiteren, nicht durch eine Figur erläuterten Ausführungsbeispiel ist die Kupplung zweier Wagen aus zwei ineinandergreifende Kupplungsteilen gebildet, wobei jeder Wagen das erste Kupplungsteil an seiner in Schienenrichtung vorderen und das zweite Kupplungsteil an seiner in Schienenrichtung hinteren Seite aufweist. Dabei ist die Kupplung derart, dass die ineinandergreifenden Kupplungsteile zwar einen maximalen Abstand der direkt benachbarten Wagen erzwingen, nicht jedoch einen minimalen Abstand. Dabei weist jeder Wagen eine ungerade Anzahl von Dauermagneten auf, so dass sich im Kupplungsbereich gleichartige Dauermagnete der benachbarten Wagen gegenüberstehen, wobei der Kupplungsbereich vorzugsweise drei, fünf oder mehr lückenden Magneten entspricht. Durch die gleichartigen und somit abstoßend aufeinander wirkenden Magnete werden die Wagen voneinander entfernt gehalten. Allerdings ist diese magnetische Beabstandung weich, so dass Geschwindigkeitsschwankungen zwischen den Wagen bedämpft werden, insbesondere sanft gedämpft werden.

### Bezugszeichenliste

1 Sorter
2 Wagen
3 Fahrbahn
20 Dauermagnete

## Patentansprüche

1. Sorter (1),
wobei der Sorter (1) eine Fahrbahn (3) und in Reihe angeordnete, jeweils aneinander gekoppelte Wagen (2) aufweist, die entlang der Fahrbahn (3) bewegbar angeordnet sind,
wobei die Fahrbahn (3) Statorwicklungen zur Erzeugung eines Magnetfeldes aufweist, so dass die Wagen (2) nach Art eines Synchronlinearmotors von den Statorwicklungen antreibbar sind,
wobei jeder Wagen (2) eine Dauermagnetanordnung aufweist, die aus in Bewegungsrichtung in Reihe angeordneten, regelmäßig voneinander beabstandeten Dauermagneten (20) besteht, wobei der jeweils nächstbenachbarte Dauermagnet eine entgegengesetzte Magnetisierungsrichtung aufweist,
wobei die Dauermagnetanordnung modular aufgebaut ist, also aus Modulen zusammengesetzt ist, wobei ein jeweiliges Modul eine jeweilige Grundplatte aufweist, auf der eine dem Modul zugeordnete Anzahl von Dauermagneten (20) befestigt ist,
wobei unterschiedliche Module sich in der Anzahl der Dauermagnete (20) unterscheiden, wobei die Grundplatte an der der Fahrbahn (3) zugeordneten Seite des jeweiligen Wagens (2) angeordnet ist,
wobei ein Abstand (a) zwischen den in Bewegungsrichtung vorderen Kanten, Ecken oder zwischen den Schwerpunkten oder Mittelpunkten der Dauermagnete (20) besteht,
wobei im Kopplungsbereich n sogenannte lückende Dauermagnete (20), also n Fehlstellen in der Reihung der Dauermagnete (20), vorgesehen sind,
wobei der letzte Dauermagnet (20) eines ersten Wagens (2) und der erste Dauermagnet (20) eines hierzu nächstbenachbarten Wagens (2) den (n+1) -fachen Abstand ((n+1)*a) zueinander aufweisen, der im Vergleich zum einfachen Abstand (a) größer ist,
wobei n eine ungerade ganze Zahl ist, die größer als zwei ist,
wobei jeder Wagen (2) eine ungerade Anzahl von Dauermagneten (20) aufweist,
wobei benachbarte Wagen (2) mittels einer Kupplung aneinandergekoppelt sind, welche aus einem vorderen, also ersten, an einem ersten der beiden Wagen (2) befestigten Kupplungsteil und aus einem hinteren, also zweiten, an dem zweiten der beiden Wagen (2) befestigten Kupplungsteil besteht,
wobei die beiden Wagen (2) mittels der sich im Kupplungsbereich gegenüberstehenden jeweiligen gleichartigen Dauermagnete (20) der beiden Wagen (2) auseinander gedrückt werden,
wobei die ineinandergreifenden Kupplungsteile nur einen maximalen Abstand, insbesondere mechanisch, der beiden Wagen (2) erzwingen, nicht jedoch einen minimalen Abstand.

2. Sorter (1) nach Anspruch 1,
**dadurch gekennzeichnet, dass**
die Module jedes Wagens (2) in Bewegungsrichtung hintereinander angeordnet und an einem Befestigungsmittel des jeweiligen Wagens (2) verbunden sind.

3. Sorter (1),
wobei der Sorter (1) eine Fahrbahn (3) und in Reihe angeordnete, jeweils aneinander gekoppelte Wagen (2) aufweist, die entlang der Fahrbahn (3) bewegbar angeordnet sind,
wobei jeder Wagen (2) eine Dauermagnetanordnung aufweist, die aus in Bewegungsrichtung in Reihe angeordneten, regelmäßig voneinander beabstandeten Dauermagneten (20) besteht, wobei der jeweils nächstbenachbarte Dauermagnet (20) eine entgegengesetzte Magnetisierungsrichtung aufweist,
wobei die Dauermagnetanordnung der Wagen (2) als Reaktivteil eines Linearsynchronmotors wirksam ist und entlang der Fahrbahn (3) Statorwicklungen des Linearsynchronmotors angeordnet sind, von deren Magnetfeldern in Wechselwirkung mit den Dauermagneten (20) die Traktionskraft für die Wagen (2) des Sorters (1) erzeugbar ist,
wobei die Dauermagnetanordnung modular aufgebaut ist, also aus Modulen zusammengesetzt ist,
wobei ein jeweiliges Modul eine jeweilige Grundplatte aufweist, auf der eine dem Modul zugeordnete Anzahl von Dauermagneten (20) befestigt ist,
wobei unterschiedliche Module sich in der Anzahl der Dauermagnete (20) unterscheiden, wobei die Grundplatte an der der Fahrbahn (3) zugeordneten Seite des jeweiligen Wagens (2) angeordnet ist,
wobei ein Abstand (a) zwischen den in Bewegungsrichtung vorderen Kanten, Ecken oder zwischen den Schwerpunkten oder Mittelpunkten der Dauermagnete (20) besteht,
wobei im Kopplungsbereich n sogenannte lückende Dauermagnete (20), also n Fehlstellen in der Reihung der Dauermagnete (20), vorgesehen sind,
wobei der letzte Dauermagnet (20) eines ersten Wagens (2) und der erste Dauermagnet (20) eines hierzu nächstbenachbarten Wagens (2) den (n+1)-fachen Abstand ((n+1) * a) zueinander aufweisen, der im Vergleich zum einfachen Abstand (a) größer ist,
wobei n eine gerade ganze Zahl ist, die größer gleich zwei ist,
wobei entgegengesetzt magnetisierte Dauermagnete (20) sich an den sich gegenüberstehenden Endbereichen der nächstbenachbarten Wagen (2) gegenüberstehen,
wobei ein an der Fahrbahn (3) angeordneter Hallsensor oder Wiegandsensor eines Positionssensorsystems durch Erkennen der Magnetisierungsrichtung die Anzahl der aufeinander folgenden Dauermagnete (20) bestimmt und mittels des Positionssensorsystems daraus bei bekannter Anzahl von Dauermagneten (20) des jeweiligen Wagens (2) die Position des Sorters (1) bestimmbar wird.

4. Sorter (1) nach einem der vorangegangenen Ansprüche,
**dadurch gekennzeichnet, dass**
eine Magnetisierungsrichtung senkrecht zur Bewegungsrichtung ausgerichtet ist.

5. Sorter (1) nach einem der vorangegangenen Ansprüche,
**dadurch gekennzeichnet, dass**
die Wagen (2) entlang der Fahrbahn (3) schienengeführt sind.

## Claims

1. A sorter (1),
wherein the sorter (1) has a track (3) and carts (2) which are arranged in a row and in each case coupled to one another and which are movably arranged along the track (3),
wherein the track (3) has stator windings to generate a magnetic field, so that the carts (2) are driveable by the stator windings in the manner of a synchronous linear motor,
wherein each cart (2) has a permanent magnet arrangement which consists of permanent magnets (20) arranged in a row in the motion direction and regularly spaced apart from one another, wherein the permanent magnet which is next-adjacent in each case has an opposite magnetisation direction,
wherein the permanent magnet arrangement is modular in construction, therefore is composed of modules, wherein a respective module has a respective base plate on which there is secured a number of permanent magnets (20) associated with the module,
wherein different modules differ in the number of the permanent magnets (20),
wherein the base plate is arranged at the side, associated with the track (3), of the respective cart (2),
wherein there is a spacing (a) between the edges, corners, at the front in the direction of motion, or between the centres of gravity or central points of the permanent magnets (20), wherein in the coupling region, n so-called absent permanent magnets (20), therefore n gaps in the series of permanent magnets (50), are provided,
wherein the last permanent magnet (20) of a first cart (2) and the first permanent magnet (20) of a cart (2) next-adjacent thereto are at the (n+1)-times spacing ((n+1)*a) from one another, this being greater in comparison with the single spacing (a),
wherein n is an odd whole number which is greater than two,
wherein each cart (2) has an odd number of permanent magnets (20),
wherein adjacent carts (2) are coupled to one another by means of a coupling which consists of a front, therefore first, coupling part secured to a first of the two carts (2) and of a rear, therefore second, coupling part secured to the second of the two carts (2),
wherein the two carts (2) are pushed apart by means of the respective permanent magnets (20), of the same kind and facing each other in the coupling region, of the two carts (2),
wherein the engaging coupling parts only enforce, in particular mechanically, a maximum spacing of the two carts (2), not however a minimum spacing.

2. A sorter (1) according to claim 1,
**characterised in that** the modules of each cart (2) are arranged behind one another in the motion direction and are connected at a securing means of the respective cart (2).

3. A sorter (1),
wherein the sorter (1) has a track (3) and carts (2) which are arranged in a row and in each case coupled to one another and which are movably arranged along the track (3),
wherein each cart (2) has a permanent magnet arrangement which consists of permanent magnets (20) arranged in a row in the direction of motion and regularly spaced apart from one another, wherein the permanent magnet (20) next-adjacent in each case has an opposite magnetisation direction,
wherein the permanent magnet arrangement of the carts (2) is effective as a reactive part of a linear synchronous motor and stator windings of the linear synchronous motor are arranged along the track (3), the traction force for the carts (2) of the sorter (1) being able to be generated by the stator-winding magnetic fields in interaction with the permanent magnets (20),
wherein the permanent magnet arrangement is modular in construction, therefore is composed of modules,
wherein a respective module has a respective base plate on which there is secured a number of permanent magnets (20) associated with the module,
wherein different modules differ in the number of the permanent magnets (20),
wherein the base plate is arranged at the side, associated with the track (3), of the respective cart (2)
wherein there is a spacing (a) between the edges, corners, at the front in a direction of motion, or between the centres of gravity or centres of the permanent magnets (20),
wherein in the coupling region, n so-called absent permanent magnets (20), therefore n gaps in the sequence of the permanent magnets (20), are provided,
wherein the last permanent magnet (20) of a first cart (2) and the first permanent magnet (20) of a cart (2) next-adjacent thereto are at the (n+1)-times spacing ((n+1) ^{∗} a) from one another,which is greater compared with the simple spacing (a),
wherein n is an even whole number which is greater than or equal to two,
wherein permanent magnets (20) with opposite magnetisation face one another at the opposite end regions of the next-adjacent carts (2),
wherein a Hall sensor or Wiegand sensor, arranged at the track (3), of a position sensor system determines the number of successive permanent magnets (20) by detection of the magnetisation direction and the position of the sorter (1) can be determined therefrom by means of the position sensor system when the number of permanent magnets (20) of the respective cart (2) is known.

4. A sorter (1) according to any one of the preceding claims,
**characterised in that**
a magnetisation direction is oriented perpendicularly to the motion direction.

5. A sorter (1) according to any one of the preceding claims,
**characterised in that**
the carts (2) are guided along the track (3) on rails.

## Revendications

1. Trieur (1),
lequel trieur (1) comprend une piste de déplacement (3) et des chariots (2) alignés, respectivement accouplés les uns aux autres et agencés avec mobilité le long de ladite piste de déplacement (3),
laquelle piste de déplacement (3) est munie d'enroulements statoriques en vue d'engendrer un champ magnétique, de telle sorte que lesdits chariots (2) puissent être entraînés par lesdits enroulements statoriques, à la manière d'un moteur linéaire synchrone,
chaque chariot (2) étant doté d'un ensemble d'aimants permanents constitué d'aimants permanents (20) alignés dans la direction de mouvement et régulièrement espacés les uns des autres, sachant que l'aimant permanent considéré, occupant la position voisine la plus proche, présente une direction de magnétisation opposée,
ledit ensemble d'aimants permanents étant de structure modulaire, c'est-à-dire qu'il est composé de modules, un module considéré étant pourvu d'une platine de base respective sur laquelle est fixé un certain nombre d'aimants permanents (20) associé audit module, sachant que des modules différents se distinguent par le nombre des aimants permanents (20),
ladite platine de base étant disposée du côté du chariot (2) considéré qui est associé à la piste de déplacement (3),
sachant qu'une distance (a) est réservée entre les arêtes ou les coins, antérieur(e)s dans la direction de mouvement, ou entre les centres de gravité ou les points centraux desdits aimants permanents (20),
sachant que n aimants permanents (20) qualifiés de manquants, c'est-à-dire n emplacements lacunaires dans l'alignement desdits aimants permanents (20), sont prévus dans la zone d'accouplement,
le dernier aimant permanent (20) d'un premier chariot (2), et le premier aimant permanent (20) d'un chariot (2) occupant la position voisine la plus proche de ce dernier, présentant alors un espacement mutuel de (n+1) fois la distance [(n+1)^{∗}a], plus grand comparativement à la distance simple (a),
n étant un nombre entier impair supérieur à deux,
chaque chariot (2) comptant un nombre impair d'aimants permanents (20),
sachant que des chariots (2) voisins sont accouplés les uns aux autres au moyen d'un accouplement composé d'une partie d'accouplement antérieure, à savoir d'une première partie fixée à un premier, au sein des deux chariots (2), et d'une partie d'accouplement postérieure, à savoir d'une seconde partie fixée au second, au sein des deux chariots (2), lesquels deux chariots (2) sont repoussés à l'écart l'un de l'autre au moyen des aimants permanents (20) respectifs desdits deux chariots (2), qui sont de type identique et sont placés en vis-à-vis dans la zone d'accouplement,
sachant que les parties d'accouplement s'interpénétrant imposent uniquement un espacement maximal des deux chariots (2), en particulier mécaniquement, mais toutefois pas un espacement minimal.

2. Trieur (1) selon la revendication 1,
**caractérisé par le fait que**
les modules de chaque chariot (2) sont agencés en succession dans la direction de mouvement, et sont reliés à un moyen de fixation du chariot (2) considéré.

3. Trieur (1),
lequel trieur (1) comprend une piste de déplacement (3) et des chariots (2) alignés, respectivement accouplés les uns aux autres et agencés avec mobilité le long de ladite piste de déplacement (3),
chaque chariot (2) étant doté d'un ensemble d'aimants permanents constitué d'aimants permanents (20) alignés dans la direction de mouvement et régulièrement espacés les uns des autres, sachant que l'aimant permanent (20) considéré, occupant la position voisine la plus proche, présente une direction de magnétisation opposée,
sachant que l'ensemble d'aimants permanents des chariots (2) agit en tant que partie réactive d'un moteur linéaire synchrone et que, le long de la piste de déplacement (3), sont disposés des enroulements statoriques dudit moteur linéaire synchrone par les champs magnétiques desquels la force de traction destinée aux chariots (2) du trieur (1) peut être engendrée en interaction avec les aimants permanents (20),
ledit ensemble d'aimants permanents étant de structure modulaire, c'est-à-dire qu'il est composé de modules,
un module considéré étant pourvu d'une platine de base respective sur laquelle est fixé un certain nombre d'aimants permanents (20) associé audit module,
sachant que des modules différents se distinguent par le nombre des aimants permanents (20),
ladite platine de base étant disposée du côté du chariot (2) considéré qui est associé à la piste de déplacement (3),
sachant qu'une distance (a) est réservée entre les arêtes ou les coins, antérieur(e)s dans la direction de mouvement, ou entre les centres de gravité ou les points centraux desdits aimants permanents (20),
sachant que n aimants permanents (20) qualifiés de manquants, c'est-à-dire n emplacements lacunaires dans l'alignement desdits aimants permanents (20), sont prévus dans la zone d'accouplement,
le dernier aimant permanent (20) d'un premier chariot (2), et le premier aimant permanent (20) d'un chariot (2) occupant la position voisine la plus proche de ce dernier, présentant alors un espacement mutuel de (n+1) fois la distance [(n+1)^{∗}a], plus grand comparativement à la distance simple (a),
n étant un nombre entier impair, égal ou supérieur à deux,
des aimants permanents (20) à magnétisations opposées étant alors placés en vis-à-vis au niveau des régions extrêmes, se faisant mutuellement face, des chariots (2) occupant des positions voisines les plus proches,
sachant qu'un capteur à effet Hall ou un capteur à effet Wiegand d'un système de détection d'emplacements, implanté sur la piste de déplacement (3), détermine le nombre des aimants permanents (20) se succédant mutuellement, par repérage de la direction de magnétisation, et l'emplacement du trieur (1) peut être déterminé sur cette base, au moyen dudit système de détection d'emplacements, lorsque le nombre d'aimants permanents (20) du chariot (2) considéré est connu.

4. Trieur (1) selon l'une des revendications précédentes,
**caractérisé par le fait**
**qu'**une direction de magnétisation est orientée perpendiculairement à la direction de mouvement.

5. Trieur (1) selon l'une des revendications précédentes,
**caractérisé par le fait que**
les chariots (2) sont guidés sur des rails le long de la piste de déplacement (3).
